# EUROPÄISCHE PATENTSCHRIFT

(11) **EP 2 793 601 B1**
(45) Veröffentlichungstag und Bekanntmachung des Hinweises auf die Patenterteilung: **02.03.2016**
(21) Anmeldenummer: 12812655.4
(22) Anmeldetag: 21.12.2012
(51) Int. Cl.: A23G 7/00, A23G 7/02, F25D 13/06

(54) **HYGIENISCHER KÜHLKANAL**
HYGIENIC COOLING CHANNEL
CANAL DE REFROIDISSEMENT HYGIÉNIQUE

(30) Priorität: 22.12.2011 DE 102011122062
(43) Veröffentlichungstag der Anmeldung: 29.10.2014
(73) Patentinhaber: Hosokawa Bepex GmbH, 74211 Leingarten (DE)
(72) Erfinder: HILTSCHER, Markus, 22337 Hamburg (DE); GROETSCH, Heiko, 20251 Hamburg (DE); BECKERT, Mike, 74211 Leingarten (DE); HORNA, Marc, 74360 Ilsfeld (DE)
(74) Vertreter: Thum, Bernhard
(86) Internationale Anmeldenummer: PCT/EP2012/076711
(87) Internationale Veröffentlichungsnummer: WO 2013/093032

(56) Entgegenhaltungen:
- EP-A1- 1 612 495
- DE-U1-202006 015 233
- GB-A- 393 105

## Beschreibung

Die vorliegende Erfindung betrifft einen Kühlkanal zum Kühlen von Kühlgut, insbesondere von Lebensmitteln oder pharmazeutischen Produkten.

Bei der Herstellung von Lebensmitteln oder pharmazeutischen Produkten, insbesondere bei der Herstellung von Süßwarenprodukten, ist es häufig erforderlich, eine erwärmte Lebensmittelmasse in eine vorbestimmte Form zu bringen, d.h. zu konfektionieren, und diese Masse anschließend über einen längeren Zeitraum zu kühlen. Hierfür werden Kühlkanäle eingesetzt, mit denen die konfektionierte Lebensmittelmasse durch eine Kühlzone gefördert wird und dabei auf ihrem Förderweg gekühlt wird. Dabei ist es möglich, die Kühlung speziell auf das verarbeitete Produkt abzustimmen, sowohl hinsichtlich Temperatur als auch hinsichtlich der Kühlzeit. Ferner können weitere Parameter wie etwa die Luftfeuchtigkeit, Luftströmung und dergleichen eingestellt werden.

Kühlkanäle zum Kühlen von insbesondere Süßwarenprodukten sind aus dem Stand der Technik bekannt. Es wird verwiesen auf die Dokumente EP 1 129 625 B1, EP 1 046 343 B1, EP 1 277 409 B1 und DE 101 19 077 C1. Obgleich bei diesem Stand der Technik verschiedene Optimierungen hinsichtlich der Förderung oder der Einstellung der Kühlparameter in der jeweiligen Kühlzone vorgenommen werden, hat sich gezeigt, dass die Kühlkanäle insbesondere im Hinblick auf eine keimarme Herstellung von Lebensmittelprodukten oder pharmazeutischen Produkten anfällig sind. Gerade im Bereich der Kühleinheit sowie des Ventilators können sich Keime bilden, die die Herstellung entsprechender Produkte beeinträchtigen. Insbesondere hat sich gezeigt, dass es schwer ist, dauerhaft die Bereiche der Luftzuführung, Filterung, Kühlung und Förderung keimarm zu halten.

Ein weiterer Kühlkanal ist aus dem Dokument JP 09-108105 A bekannt. Dieser Kühlkanal unterliegt jedoch dem Problem, dass durch die Anordnung erhebliche Kontaminationen des Innenraums der Kühlzone erfolgen können, was in einer Keimbildung resultiert. Darüber hinaus lässt sich diese Anordnung schwer reinigen.

Aus dem Dokument DE20 2006 015 233 U1 ist eine Transporteinrichtung für Lebensmittel mit einer Transportbahn bekannt. Die Oberseite der Transportbahn ist durch einen Schutzmantel unter Bildung eines Transportkanals abgedeckt und eine Lüftungseinrichtung ist vorgesehen, über welche dem Transportkanal entkeimte Luft zugeführt wird.

Aus dem Dokument EP1612495 ist eine Vorrichtung zur Kühlung von Produkten bekannt die eine effiziente und schnelle Kühlung des Produkts gewährleistet.

Die Erfindung zielt darauf ab, einen Kühlkanal der eingangs bezeichneten Art bereitzustellen, der diesen Problemen Rechnung trägt und mit dem dauerhaft eine keimarme Kühlung des Kühlguts über lange Zeit möglich ist.

Diese Aufgabe wird durch einen Kühlkanal zum Kühlen von Kühlgut, insbesondere Lebensmittel oder pharmazeutische Produkte, gelöst, wobei dieser Kühlkanal mit einem Kühlturm ausgebildet ist, der die folgenden Merkmale umfasst:
- ein Einlaufende und ein Auslaufende,
- ein angetriebenes Förderband, auf dem das Kühlgut angeordnet und von dem Einlaufende zu dem Auslaufende durch den Kühlkanal förderbar ist,
- ein Gehäuse, das das Förderband umgibt und im Bereich des Förderbands eine Kühlzone bildet,
- eine Filtereinheit zum Filtern von Luft,
- eine Kühleinheit zum Kühlen der Kühlzone und
- wenigstens einen Ventilator, der in thermodynamischer Wechselwirkung mit der Kühleinheit steht und zum Fördern von gekühlter Luft von der Kühleinheit zur Kühlzone ausgebildet ist,
wobei die Kühleinheit und der Ventilator in einem gegenüber der Kühlzone separat und hiervon abgedichtet ausgebildeten Gehäusebereich angeordnet sind, wobei lediglich eine fluidische Verbindung zum Fördern der gekühlten Luft zwischen dem Ventilator und der Kühlzone vorgesehen ist und wobei die Filtereinheit bezüglich des Luftstroms vor der Kühleinheit angeordnet ist, um der Kühleinheit lediglich gefilterte Luft zuzuführen.

Im Rahmen der Erfindung wurde erkannt, dass die beim Stand der Technik hinsichtlich des Eintrags von Verunreinigungen und Keimen in die Kühlzone und die dadurch hervorgerufenen Probleme, insbesondere aufgrund der fluidischen und thermodynamischen Wechselwirkung mit der Umgebungsatmosphäre, mit herkömmlichen Techniken nicht zufriedenstellend gelöst werden können. Die Erfindung beschreitet daher einen anderen Weg und sorgt dafür, dass diejenigen Kühlkanalkomponenten, die besonders anfällig für das Auftreten von Verunreinigungen und Keimen sind, in einem gesonderten Gehäusebereich untergebracht werden, der von der Kühlzone physikalisch getrennt und hiervon abgedichtet ausgebildet ist, wobei lediglich eine fluidische Verbindung zum Fördern der gereinigten keimarmen gekühlten Luft zwischen diesem Gehäusebereich und der Kühlzone vorgesehen ist.

Ferner sieht die Erfindung vor, dass die Prozessluft nur in gereinigtem Zustand nach Passieren der Filtereinheit der Kühleinheit zugeführt wird und von dieser schließlich im gereinigten Zustand der Kühlzone zugeführt wird. Dadurch kann verhindert werden, dass kontaminierte Umgebungsluft bereits in die Kühlzone eindringt, die für Kontaminationen und Keimbildung besonders anfällig ist.

Es wird also anders als bisher im Stand der Technik nicht versucht, direkt an den jeweiligen Einheiten (Kühleinheit und Ventilator) Reinigungsmaßnahmen zu treffen. Stattdessen wird durch hinreichende Filterung der eintretenden Luft verhindert, dass diese Komponenten überhaupt kontaminiert und einer daraus resultierenden Keimbildung ausgesetzt werden. Selbst wenn aber an diesen Komponenten - trotz aller Sorgfalt - zumindest temporär Verunreinigungen auftreten, sieht die Erfindung vor, dass ein Übertreten dieser Verunreinigungen auf das zu fördernde Kühlgut, d.h. die verarbeiteten Lebensmittel oder pharmazeutischen Produkte, insbesondere dadurch unterbunden werden kann, dass diese problematischen Komponenten des Kühlkanals - abgesehen von der zuströmenden Prozessluft - von der Kühlzone physikalisch abgekapselt und separiert werden. Diese Maßnahme hat sich in Tests als äußerst wirkungsvoll erwiesen, weil der eigentliche Verursacher von Kontaminationen, nämlich Kondenswasser, erfindungsgemäß aus dem Kühlkanal herausgehalten wird.

Gemäß der Erfindung ist es vorgesehen, dass die Kühleinheit einen Wärmetauscher aufweist, der mit der Umgebung in thermodynamischer Wechselwirkung steht. Dabei ist es möglich, dass der Wärmetauscher in einer diesem zugeordneten Wärmetauscherkammer innerhalb des abgedichtet ausgebildeten Gehäusebereichs angeordnet ist. Insbesondere ist es möglich, dass die Wärmetauscherkammer innerhalb des abgedichtet ausgebildeten Gehäusebereichs als separate Zelle ausgebildet ist. Zusätzlich zu der Kapselung von Kühleinheit und Ventilator ist es also erfindungsgemäß auch möglich, insbesondere den Wärmetauscher nochmals in einer gesonderten Zelle innerhalb des gekapselten Gehäusebereichs anzuordnen. Gerade im Bereich des Wärmetauschers kommt es zu Kondenswasserabscheidung und Tröpfchenbildung und demzufolge zu Verunreinigungen oder Keimbildung, so dass eine gesonderte Kapselung einen weiteren Beitrag zur Vermeidung einer Produktkontamination leistet.

Ferner kann vorgesehen sein, dass dem Wärmetauscher ein Tropfenabscheider zum Entfeuchten der gekühlten Luft zugeordnet ist. Dabei ist es möglich, dass der Tropfenabscheider in der Wärmetauscherkammer angeordnet ist.

Der Wärmetauscher ist bei einer Ausführungsvariante der Erfindung an der Oberseite befestigt, um einen einfachen Ein- und Ausbau zu gewährleisten. Gleichzeitig ergibt sich eine glatte, leicht zu reinigende Fläche unterhalb und bei entsprechender Anordnung auf Abstand auch oberhalb des Wärmetauschers.

Zur weiteren Erleichterung der Reinigung und Entsorgung von auftretender Feuchtigkeit und Kondenswasser kann erfindungsgemäß ferner vorgesehen sein, dass in der Wärmetauscherkammer, wenigstens eine entnehmbare Auffangwanne unterhalb der Kühleinheit, insbesondere unterhalb des Wärmetauschers oder/und des Tropfenabscheiders angeordnet ist.

Um den Eintrag von Verunreinigungen und Keimen in den Kühlkanal zu minimieren, sieht die Erfindung wie eingangs bereits erwähnt vor, dass der Kühleinheit eine Filtereinheit vorgeschaltet ist, durch welche die Umgebungsluft strömt, bevor sie in die Kühleinheit eintritt. Dabei ist es möglich, dass die Filtereinheit in einer gegenüber der Kühlzone separat und hiervon abgedichtet ausgebildeten Filterkammer des abgedichtet ausgebildeten Gehäusebereichs angeordnet ist, wobei die Filterkammer über eine Filterschleuse mit der Kühleinheit fluidisch in Verbindung steht.

Der Eintrag von verunreinigter, keimhaltiger Luft in die Kühlzone kann ferner dadurch weiter minimiert werden, dass der Filtereinheit oder/und dem Wärmetauscher, vorzugsweise im Bereich der Filterschleuse, wenigstens eine Bestrahlungseinrichtung zugeordnet ist. Insbesondere ist hierbei vorgesehen, dass die Bestrahlungseinheit wenigstens eine UV-Lichtquelle aufweist. Dabei kann ausgenutzt werden, dass der Wärmetauscher eine gewisse Bremswirkung auf dem Luftstrom ausübt, so dass der Luftstrom länger der UV-Lichtquelle ausgesetzt ist, wodurch deren sterilisierende Wirkung verstärkt wird.

Ähnlich wie hinsichtlich des Wärmetauschers kann auch hinsichtlich des Ventilators vorgesehen sein, dass der Ventilator in einer diesem zugeordneten Ventilatorkammer innerhalb des abgedichtet ausgebildeten Gehäusebereichs angeordnet ist.

Um die Effizienz hinsichtlich der Luftförderung des Ventilators zu steigern, sieht eine Weiterbildung der Erfindung vor, dass der Ventilator gegenüber der Erstreckungsebene des Förderbandes, vorzugsweise um einen Winkel α von 10° bis 30°, geneigt angeordnet ist. In diesem Zusammenhang kann ferner vorgesehen sein, dass dem Ventilator wenigstens eine Luftleiteinrichtung zum Ausrichten des Luftstroms vom Ventilator in die Kühlzone zugeordnet ist.

Um eine bessere Zugänglichkeit, insbesondere zu Reinigungszwecken zu schaffen, kann vorgesehen sein, dass das Gehäuse im Bereich der Kühlzone oder/und in dem hiervon separat und abgedichtet ausgebildeten Gehäusebereich zur Aufnahme der Kühleinheit und des Ventilators jeweils durch eine oder mehrere Klappen oder Hauben zu öffnen und verschließbar ist.

Es ist anzumerken, dass das gesamte Gehäuse, insbesondere aber das Gehäuse im gekapselten Gehäusebereich für Kühleinheit und Ventilator vorzugsweise aus Edelstahl ausgebildet ist. Vorzugsweise ist das Edelstahlmaterial fachgerecht dichtend verschweißt, so dass Silikondichtungen vermieden werden können. Dadurch kann ein weiteres Risiko von Keimbildung im Bereich der Dichtungen reduziert werden.

Die Erfindung zeichnet sich dadurch aus, dass diejenigen Bereiche, in denen Kondenswasser auftritt, von den Bereichen, in denen das zu verarbeitende Produkt gekühlt wird, also von der Kühlzone, separiert sind. Das auftretende Kondenswasser, das regelmäßig als "unkontrolliertes Wasser" im Prozess auftritt und entsorgt werden muss, kann daher von diesen kritischen keimarm zu haltenden Bereichen der Kühlzone gänzlich fern gehalten werden.

Vorzugsweise sind die gekapselten Gehäusebereiche mit separaten Abläufen, Klappen bzw. Tropfkästen versehen, um ein gezieltes Entsorgen oder Abtropfen von derartigem unkontrollierbarem Wasser sicherzustellen. Wie vorstehend angedeutet können verschiedene Auffangwannen in den einzelnen Gehäusebereichen untergebracht werden, um auftretende Feuchtigkeit aufzufangen und leicht entsorgen zu können. Hierzu können die Auffangwannen mit Schnellverschlüssen gesichert sein.

Eine vorteilhafte Weiterbildung der Erfindung sieht in diesem Zusammenhang vor, dass die Wärmetauscherkammer, die Filterkammer und die Ventilatorkammer mit einer wesentlich größeren Breite ausgeführt sind als das Förderband und beidseits des Förderbandes quer zu dessen Förderrichtung über das Förderband hinaus stehen. Dadurch ist gewährleistet, dass selbst dann, wenn Leckagen im Bereich dieser Kammern auftreten, und etwa kontaminiertes Medium, wie beispielsweise Kondenswasser, aus einer dieser Kammern austritt, dieses Medium an dem Förderband vorbei tropft und nicht in den Bereich der Kühlzone gelangt. Durch diese einfache konstruktive Maßnahme lässt sich wirksam eine Kontamination des Kühlguts verhindern.

Auch die vorstehend erwähnte Luftleiteinrichtung kann zu Reinigungszwecken entfernbar sein.

Zusätzlich sei angemerkt, dass die Energieversorgung für die einzelnen angetriebenen Teile, wie etwa Pumpen, Ventile, elektrische Bauteile, Ventilator, etc. in einer gesonderten gekapselten Einheit untergebracht werden können, beispielsweise in einem Edelstahlgehäuse oberhalb oder seitlich der Anlage.

Hinsichtlich der geometrischen Anordnung hat die Erfindung den Vorteil, dass der gekapselte Bereich mit Kühleinheit und Ventilator wahlweise oberhalb oder unterhalb der Kühlzone angeordnet werden kann und von der Kühlzone mit Ausnahme des Bereichs der Einleitung der gekühlten Luft in die Kühlzone physikalisch getrennt ist. Dadurch kann verhindert werden, dass bei einem kompakten Aufbau des Kühlkanals unkontrollierte Feuchtigkeit oder Wasser in die Kühlzone eintritt. Hinzu kommt die vorstehend angesprochene breitere Ausbildung der einzelnen Kammern gegenüber der Kühlzone, insbesondere gegenüber dem Förderband im Produktbereich. Die eingangs beim Stand der Technik geschilderten Probleme können damit wirkungsvoll unterbunden werden.

Wie vorstehend mehrfach angedeutet, kann erfindungsgemäß vorgesehen sein, dass das Gehäuse und die Unterbaukomponenten dicht verschweißt und vorzugsweise aus Edelstahl hergestellt sind. Es ist auch erfindungsgemäß möglich, die einzelnen Komponenten als zusammensetzbare Module bereitzustellen und dann beim Errichten des Kühlkanals dicht und frei von Fügekanten zu verschweißen, beispielsweise derart, dass einzelne Kühltischplatten und das Gehäuse des Kühlturms miteinander verscheißt werden.

Ferner kann erfindungsgemäß vorgesehen sein, dass die Wärmetauscherkammer, die Filterkammer und die Ventilatorkammer mit einer wesentlich größeren Breite ausgeführt sind als das Förderband und beidseits des Förderbandes quer zu dessen Förderrichtung über das Förderband hinaus stehen. Auch durch diese Maßnahme lässt sich im Leckagefall verhindern, dass kontaminiertes Wasser in die Kühlzone eindringt.

Schließlich sei angemerkt, dass die einzelnen Komponenten, wie etwa Wärmetauscher, Tropfenabscheider, Ventilator aber auch Filter und Bestrahlungseinheit modulartig ausgebildet und separat vom Kühlkanal zu Wartungs- oder Reparaturzwecken entnommen werden können.

Die Erfindung wird im Folgenden beispielhaft anhand der beiliegenden Figuren erläutert. Es stellen dar:
- Fig. 1: eine räumliche Seitenansicht des erfindungsgemäßen Kühlkanals;
- Fig. 2: eine weitere räumliche Seitenansicht des erfindungsgemäßen Kühlkanals;
- Fig. 3: eine Seitenansicht eines Ausschnitts des erfindungsgemäßen Kühlkanals mit Kühlturm mit teilweise geöffneten Gehäusebereichen;
- Fig. 4: eine räumliche Darstellung des Ausschnitts des Kühlkanals gemäß Fig. 3;
- Fig. 5: eine Rückansicht in räumlicher Darstellung des in Fig. 3 und 4 gezeigten Ausschnitts des Kühlkanals;
- Fig. 6: eine Seitenansicht von rechts des in Fig. 3 dargestellten Ausschnitts des Kühlkanals mit geöffnetem Gehäusebereich;
- Fig. 7: eine weitere Seitenansicht des Kühlturms mit geöffneten Gehäusebereichen in einer leicht abgewandelten Ausführungsform;
- Fig. 8: eine Schnittansicht entlang der Schnittlinie VIII-VIII aus Figur 7;
- Fig. 9: eine räumliche Ansicht des Kühlturms im geöffneten Zustand gemäß Figur 7;
- Fig. 10: eine Darstellung eines Einlauftisches für den erfindungsgemäßen Kühlkanal;
- Fig. 11: eine Darstellung einer Kühlkanalhaube für den erfindungsgemäßen Kühlkanal;
- Fig. 12: eine Detaildarstellung zu dem in Figur 11 hervorgehobenen Bildbereich;
- Fig. 13: eine Darstellung einer Vorrichtung zur Einstellung der Bandspannung für den erfindungsgemäßen Kühlkanal;
- Fig. 14: eine Darstellung eines Antriebsständers für den erfindungsgemäßen Kühlkanal, und
- Fig. 15: eine Darstellung eines Auslauftisches für den erfindungsgemäßen Kühlkanal.

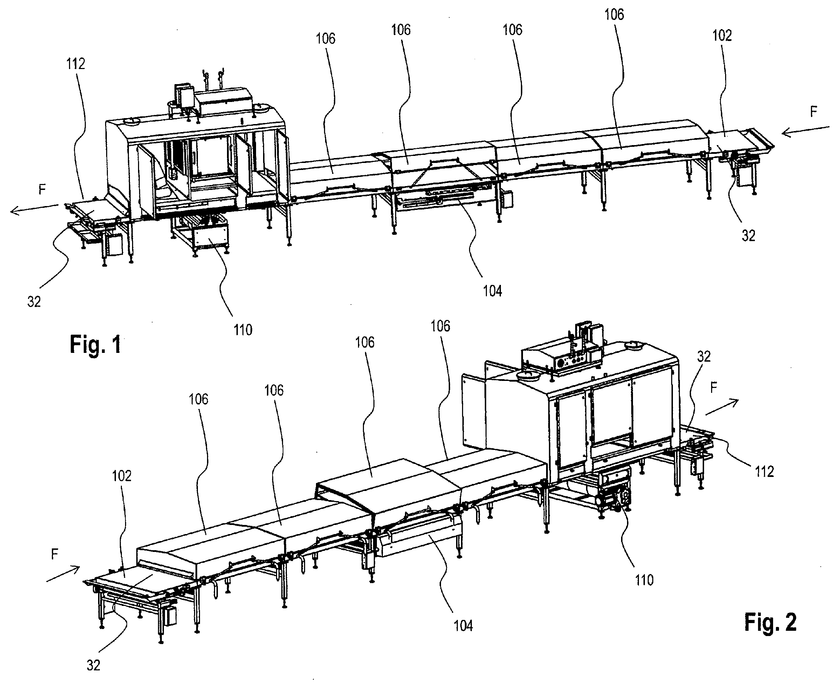

In Fig. 1 und 2 ist ein erfindungsgemäßer Kühlkanal mit teilweise geöffneten Gehäusebereichen gezeigt und allgemein mit 100 bezeichnet. Er umfasst einen Einlauftisch 102, von dem ein angetriebenes Transportband 32 ausgeht und Kühlgut in Förderrichtung F fördert. Das Transportband 32 läuft unter einer Mehrzahl von vier Kühlhauben 106 hindurch und kann über eine Bandspannvorrichtung 104 gespannt werden. Eine der Kühlhauben 106 ist in einem teilweise geöffneten Zustand gezeigt. Ein wesentlicher Bestandteil des Kühlkanals 100 ist ein Kühlturm 10, der im Folgenden noch im Detail erläutert werden wird. Unter dem Kühlturm 10 ist ein Antriebsständer 110 angeordnet. An den Kühlturm 10 schließt sich ein Auslauftisch 112 an.

Der erfindungsgemäßen Kühlkanal 100 dient dazu, Kühlgut, wie etwa Lebensmittelprodukte, beispielsweise zu Schokoriegeln vorgefertigte Süßwarenprodukte, oder pharmazeutische Produkte, zu kühlen und diese am Auslaufende 112 einer nicht gezeigten Verpackungsstation zuzuführen.

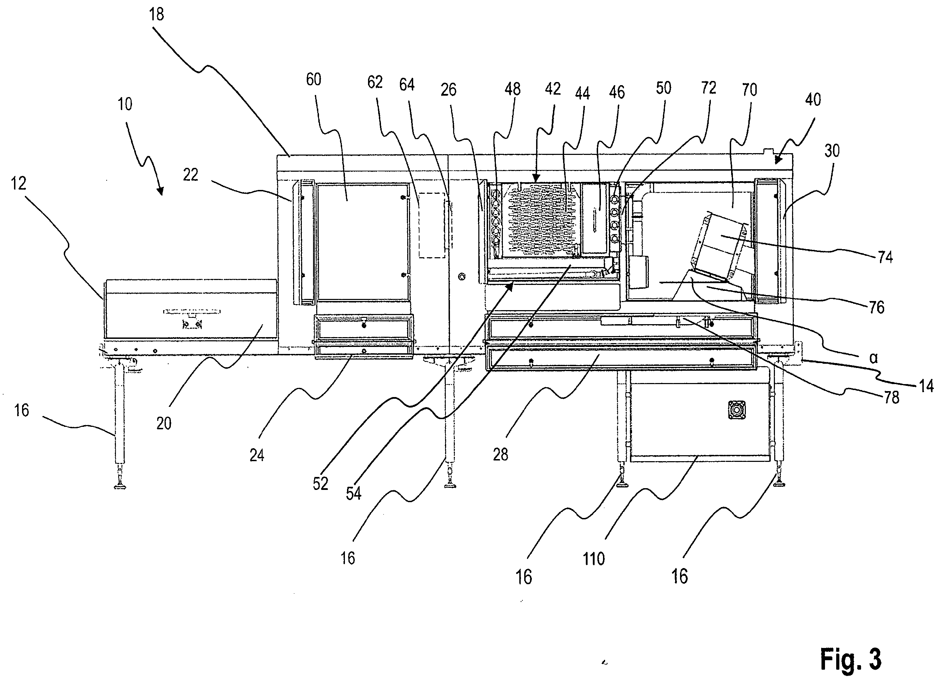

Im Folgenden soll zunächst auf eine Ausführungsvariante zu dem Kühlturm 10, wie sie bei dem Kühlkanal 100 zum Einsatz kommen kann, mit Bezug auf die Darstellungen gemäß den Figuren 3 bis 9 eingegangen werden. Die im Folgenden beschriebene Ausführungsvariante des Kühlturms weicht in Details geringfügig von der Ausführungsform gemäß Figuren 1 und 2 ab.

Der Kühlturm 10 ist auf einer Mehrzahl von Füßen 16 angeordnet. Er ist mit einem Gehäuse 18 aus Edelstahl ausgeführt, das mehrere Klappen 22, 24, 26, 28 und 30 aufweist, die jeweils geöffnet werden können und so Zugang zu verschiedenen Bereichen des Kühlturms 10 innerhalb des Gehäuses 18 bieten. Dabei ist hervorzuheben, dass die Klappen 24 und 28 separat und unabhängig von den Klappen 22, 26 und 30 geöffnet werden können. So kann die Kühlzone, in der ein Förderband 32 für das Kühlgut verläuft, geöffnet werden, während die evtl. keimtragenden oder kontaminierten Bereiche 60, 52, 70 geschlossen bleiben.

Das Gehäuse 18 ist vorzugsweise komplett aus Edelstahl hergestellt und umlaufend dichtend verschweißt. Es ist frei von Silikondichtungen, um das Risiko von Leckagen und das Auftreten von Bakterien und Keimbildung zu unterbinden. Ferner ist das Gehäuse 18 komplett thermisch isoliert.

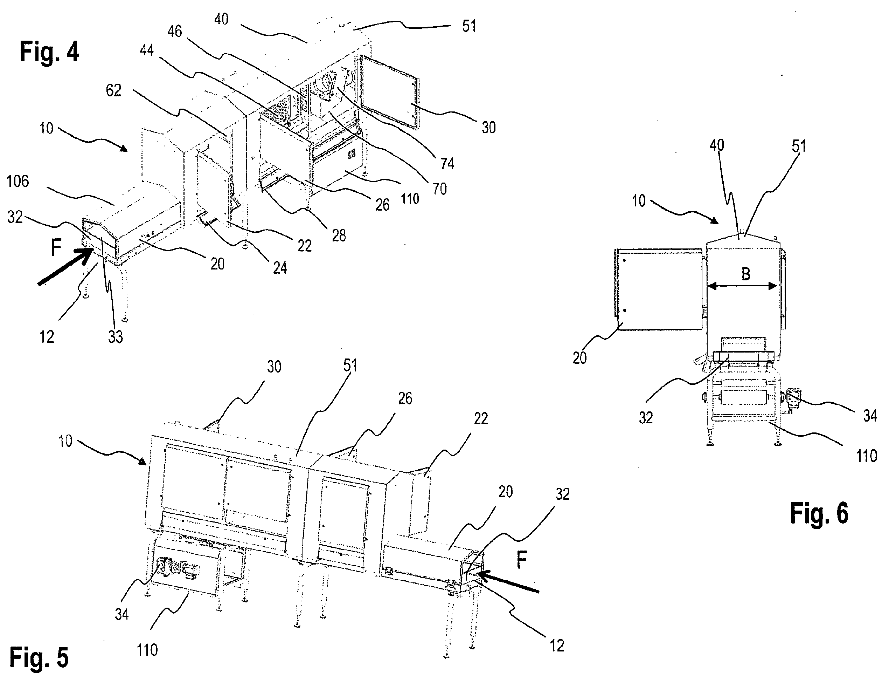

Innerhalb des Kühlturms 10 ist, wie allgemein bekannt und insbesondere in den Fig. 4 und 5 erkennbar, das Förderband 32 vorgesehen, das über eine Antriebseinrichtung 34 in Förderrichtung F antreibbar ist. Die Antriebseinrichtung 34 ist in dem gesonderten Antriebsständer 110 unterhalb des Kühlturms 10 angeordnet und wird im Detail nicht näher beschrieben. In diesem Antriebsständer 110 ist ein Antrieb für das Förderband 32 untergebracht. Weitere Versorgungskomponenten, wie etwa Schaltungstechnik, Spannungsversorgung etc., für die im Folgenden beschriebenen Funktionskomponenten des Kühlturms können in einen separaten Gehäuse vorgesehen sein. Ferner erkennt man in Fig. 4 noch einen Rückluftkanal 33 zum Rückführen von Kühlluft aus der Kühlzone zum Wäremetauscher.

Oberhalb des Förderbandes 32 und um dieses herum ist innerhalb des Gehäuses 18 eine Kühlzone vorgesehen, d.h. ein Hohlraum im Gehäuse 18, in dem sich ein Kühlklima ausbilden kann, um das auf dem Förderband 32 liegende und über dieses das durch den Kühlturm 10 geförderte Kühlgut entsprechend der eingestellten Kühlparameter beim Durchlaufen des Kühlturms 10 in gewünschtem Maße zu kühlen.

Das Gehäuse 18 weist einen in Fig. 1 nach oben vorspringenden turmartigen Gehäusebereich 40 auf, der im Folgenden näher erläutert wird. In diesem Gehäusebereich 40 sind für das Einstellen des Kühlklimas relevante Komponenten angeordnet. Insbesondere weist dieser Gehäusebereich 40, die Tür 26, eine Kühleinheit 42 auf mit einem Wärmetauscher 44, dem ein Tropfenabscheider 46 nachgeschaltet ist. Der Wärmetauscher 44 ist in hängender Anordnung angebracht und somit zu Reinigungszwecken sowohl von oben als auch von unten zugänglich. Über und unter dem Wärmetauscher 44 ist jeweils ein Hohlraum vorgesehen, so dass der Wärmetauscher 44 auch im eingebauten Zustand gereinigt werden kann.

Es sei angemerkt, dass der Wärmetauscher 44 mit einem zusätzlichen Warmwasseranschluss versehen ist, so dass zum Desinfizieren die gesamte Wärmetauschereinheit erhitzt werden kann, um im eingebauten Zustand darin eventuell enthaltene Keime abzutöten.

Dem Wärmetauscher 44 vorgeschaltet ist eine UV-Bestrahlungseinheit 48. Dem Tropfenabscheider 46 nachgeschaltet ist ebenfalls eine zweite UV-Bestrahlungseinheit 50. Die beiden UV-Bestrahlungseinheiten 48 und 50 sowie der Wärmetauscher 44 und der Tropfenabscheider 46 sind in einer gesonderten Kammer 52 angeordnet, die im Folgenden allgemein als Wärmetauscherkammer 52 bezeichnet wird.

Unterhalb dieser Komponenten ist in der Wärmetauscherkammer 52 eine Auffangwanne 54 angeordnet, die dazu dient, in dieser Kammer 52 auftretendes Kondenswasser aufzufangen und entsorgen zu können. Die Auffangwanne 54 ist mit einem automatischen Flüssigkeitsentleerungssystem versehen. Sie ist darüber hinaus mit einem auf einfache Weise manuell bedienbaren Verriegelungsmechanismus versehen, der leicht gelöst werden kann, damit die Auffangwanne 54 aus dem Gehäuse 18, insbesondere aus der Kammer 52, zu Reinigungszwecken entnehmbar ist.

Der Wärmetauscherkammer 52 vorgeschaltet ist eine ebenfalls abgetrennte Filterkammer 60. In dieser ist ein Filter 62 angeordnet, durch den in die Filterkammer eintretende Umgebungsluft zwingend hindurchtreten muss, um eine zwischen der Filterkammer 60 und der Wärmetauscherkammer 52 angeordnete Filterschleuse 64 zu passieren. Der Filter 62 besteht vorzugsweise aus einem Vorfilter und einem Hauptfilter. Die Filterkammer 60 hat eine Verbindung (nicht gezeigt) zur Kühlzone und zum Rückluftkanal 33, um Rückluft aus dem Rückluftkanal 33 anzusaugen. Bei dem Filter 62 handelt es sich um einen Partikelfilter, vorzugsweise ein Feinstaubfilter der Filterklasse F9 gemäß DIN EN 779, mit einem hohen Wirkungsgrad (> 95%).

Der Wärmetauscherkammer 52 nachgeschaltet ist eine Ventilatorkammer 70. Zwischen der Wärmetauscherkammer 52 und der Ventilatorkammer 70 ist wiederum eine Luftschleuse angeordnet, die allgemein mit 72 bezeichnet ist. Diese Luftschleuse 72 umfasst eine zusätzliche Heizvorrichtung 73, die dazu vorgesehen ist, die in die Ventilatorkammer 70 eintretende Luft um wenige Grad, beispielsweise um 1-2°C, zu erwärmen, so dass deren relative Feuchte angehoben wird. Dadurch kann die Kondensatbildung in der Kühlzone wirksam unterdrückt werden. Zusätzlich erkennt man einen abgedichtet ausgebildeten und geführten Kabelkanal 75. In der Ventilatorkammer 70 ist ferner ein Ventilator 74 angeordnet. Dieser ist auf einer Gehäuserampe 76 in schräger Ausrichtung mit einem Neigungswinkel von etwa 15° untergebracht. Die Gehäuserampe 76 weist eine Öffnung auf, über die mittels des Ventilators gekühlte Luft in die unter der Ventilatorkammer 70 durchlaufende Kühlzone strömen kann. Um diesen Luftstrom in die Kühlzone gerichtet einzuleiten, ist ein Luftführungskanal 78 aus einem Luftleitblech vorgesehen.

Wie man insbesondere in den Figuren 3 bis 7 erkennen kann, sind die Filterkammer 60, die Wärmetauscherkammer 52, die Ventilatorkammer 70 und der darunter liegende Produktbereich vollständig voneinander getrennt und über jeweils zugeordnete Klappen oder Türen separat zugänglich ausgebildet. Dadurch kann erreicht werden, dass kein unerwünschter Austausch von Medien zwischen den einzelnen Kammern erfolgt, außer über die vorgesehenen Verbindungen.

Der Kühlturm 10 weist, wie insbesondere in den Figuren Ziffer 4 bis 6 zu erkennen ist, eine größere Breite B auf, als der Produktbereich mit dem Förderband 32. Dadurch ist gewährleistet, dass selbst dann, wenn es zu einer Leckage etwa in der Wärmetauscherkammer 52 kommt, die Kondenswasser oder Kühlmedium aus der Wärmetauscherkammer 52 austreten lässt, dieses Medium nicht in den Bereich des Förderbandes 32 gelangt, sondern sozusagen an diesem seitlich vorbeiströmt oder vorbeitropft. Es ist mit der erfindungsgemäßen Anordnung durch die Anordnung der einzelnen Komponenten in voneinander getrennten Kammern möglich, Kontaminationen des zu kühlenden Kühlguts wirksam zu vermeiden.

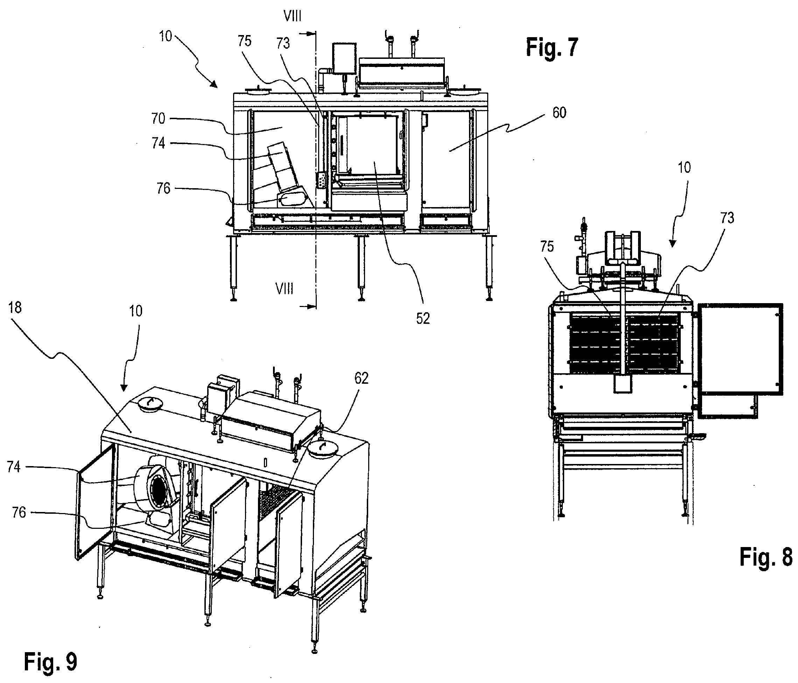

Im Detail zeichnet sich der erfindungsgemäße Kühlturm 10 ferner dadurch aus, dass er eine "spitze" Dachgeometrie 51 aufweist, die die Reinigung erleichtert, ein Abströmen von Flüssigkeiten fördert und Pfützenbildung vermeidet. Die gesamte Elektrik und Pneumatik ist innerhalb und außerhalb des Kühlturms 10 in hygienischen Klemmkästen angeordnet und kann so einfach gewartet werden. Darüber hinaus ist sie dadurch einzelnen Medien und Temperaturschwankungen weniger stark exponiert. Die Kabelführung erfolgt von innen nach außen und innerhalb des Kühlturms in dicht verschweißen Edelstahlrohren und abgedichteten Kabelverschraubungen, um auch so Leckagen und Kontaminationen entgegenzuwirken, wie etwa in Fig. 8 bei 75 gezeigt.

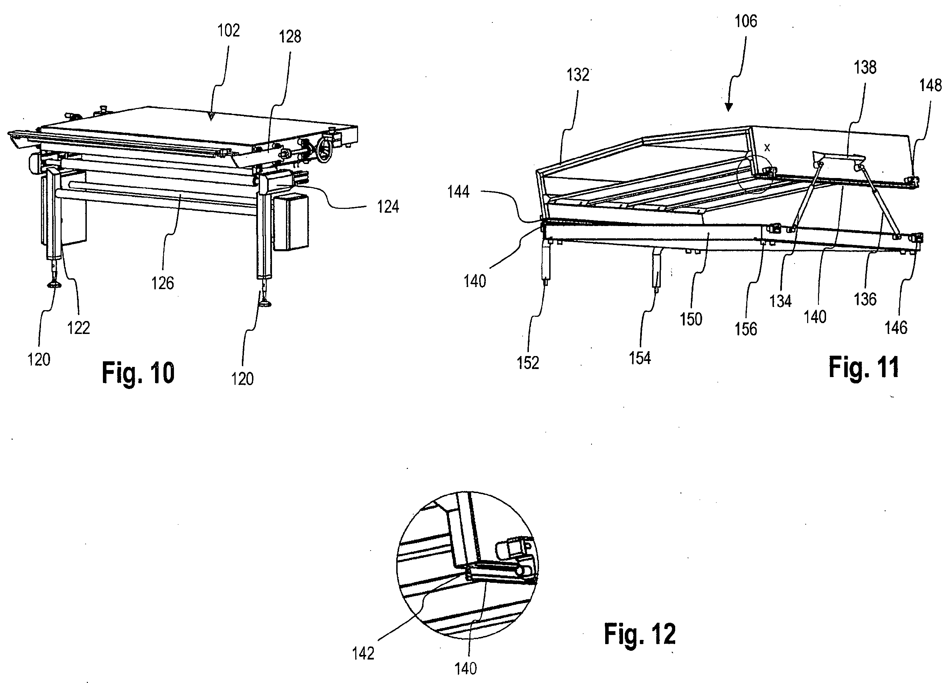

Neben dem Kühlturm 10 weist der Kühlkanal 100 die folgenden Komponenten auf, deren charakteristische konstruktiven Eigenschaften kurz erläutert werden:
- Der Einlauftisch 102, der im Detail räumlich in Figur 10 gezeigt ist, steht auf zwei Füßen 120. Er weist ein Gestell 122 auf, das komplett dicht verschweißt ist, so dass keine Medien eindringen können. Er ist mit einer außen liegenden Bandsteuerung 124 versehen. Ferner ist eine rohrförmige Kabelführung 126 gezeigt, die ebenfalls dicht verschlossen ist. Schließlich erkennt man eine Vorrichtung 128 zur Verstellung des Umlenkprofils für das Förderband (nicht gezeigt). Auch diese Vorrichtung ist außen liegend angeordnet und so leicht zu reinigen.
- Die Kühlkanalhaube 106 weist eine Edelstahlhaube 132 auf, die in Dachform ausgebildet ist, um das Abfließen von Medien und die Reinigung zu erleichtern und um Pfützenbildung zu vermeiden. Zu Zwecken der thermischen Isolation ist sie vollständig ausgeschäumt. Man erkennt ferner, dass zwei Gasdruckfedern 134, 136 außen liegend und mit hinreichendem Abstand vom Innenraum angeordnet sind. Selbst wenn es zu einer Leckage - etwa von Schmiermittel oder Gas - an den Gasdruckfedern kommt, ist dadurch gewährleistet, dass der Innenraum und das darin geförderte Kühlgut nicht kontaminiert werden. Zum Öffnen ist ein Edelstahlgriff 138 vorgesehen, der ebenfalls voll angeschweißt ist und somit keine zusätzlichen Schmutz tragenden Befestigungsmittel erfordert. In Längsrichtung ist jeweils eine einfach zu reinigende Dichtung 140 vorgesehen, die über eine dicht verschweißte Dichtungskante 142 aufgenommen ist. Auch die Scharniere 144 auf der von den Gasdruckfedern 134, 136 abgewandten Seite sind in hinreichendem Abstand vom Innenraum angeordnet und dicht verschweißt, ohne dass zusätzliche Befestigungsmittel erforderlich sind. Schließlich erkennt man ebenfalls im Abstand vom Innenraum angeordnete vordere Scharniere 146, 148. Die Scharniere 144, 146, 148 erlauben ein Öffnen der Kühlkanalhaube 106 wahlweise von links oder von rechts.Ferner ist unter der Edelstahlhaube 132 eine Kühltischplatte 150 vorgesehen, die dicht verschweißt ausgebildet ist. Auch diese ist vollständig ausgeschäumt und mit einer Wasser- bzw. Sole- oder Frigenkühlung versehen. Die Kühlung wird über in Edelstahl ausgeführte Anschlüsse 152, 154 mit Kühlmittel versorgt. Diese Anschlüsse 152,154 sind komplett isoliert und dicht verschweißt. Ferner sind Befestigungslaschen 156 an der Unterseite der Kühltischplatte 150 angeordnet und dicht verschweißt, um eine Anbringung von geeigneten Füßen im Abstand zu der Kühltischplatte 150 vorzusehen.

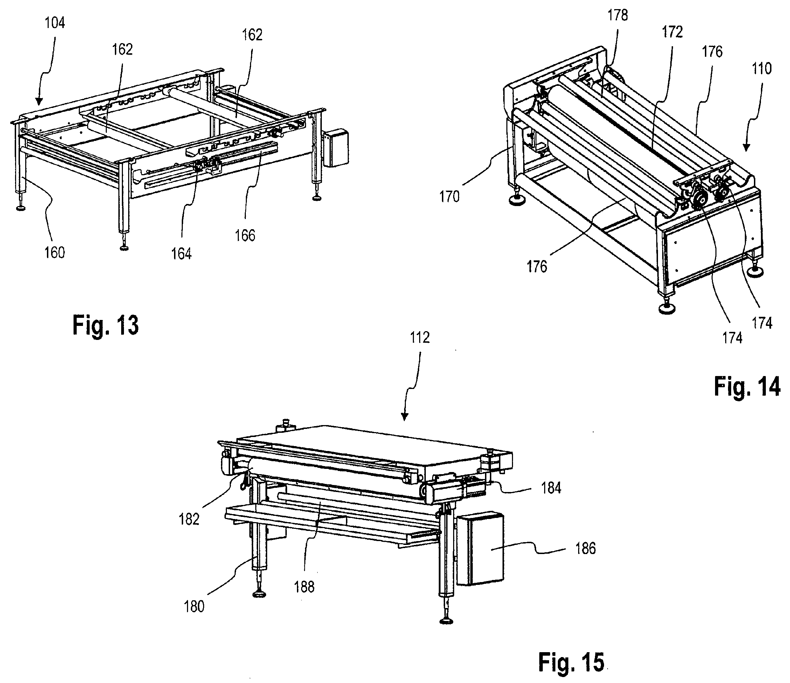

- Figur 13 zeigt die Vorrichtung 104 zur Bandspannung. Auch diese weist ein Grundgestell 160 auf, das komplett dicht verschweißt ist. Darüber hinaus sind Walzenkörper 162 dicht verschweißt. Die Lagerung der Walzenkörper 162 an dem Gestell 160 erfolgt in einem Bereich 164, der außerhalb und in hinreichendem Abstand von Transportbandbereich angeordnet ist. Schließlich erkennt man, dass auch zur Verstellung des Spannzustandes des Förderbandes vorgesehene Pneumatikzylinder 166 (nur einer gezeigt) außen liegend angeordnet sind. Auch von diesen Pneumatikzylindern 166 kann daher im Bereich der Kühlzone keine Kontamination ausgehen.
- Figur 14 zeigt den Antriebsständer 110. Auch dessen Grundgestell 170 ist komplett dicht verschweißt. Gleichsam sind alle Walzenkörper 172 und Achsen aller Walzen 172 dicht verschweißt. Wiederum ist die Lagerung 174 der Walzen 172 außen liegend angeordnet. Ferner erkennt man Ablageschienen 176, die es ermöglichen, die Umlenkwalzen 172 auf einfache Art und Weise auszubauen und in diesen abzulegen. Auch dadurch können Kontaminationen und Verschmutzungen der Walzen 172 verhindert werden. Schließlich erkennt man Abstreifer 178, die einfach ohne großen Aufwand, insbesondere ohne zusätzliches Werkzeug ausbaubar sind.
- Figur 15 zeigt den Auslauftisch 112. Auch dessen Gestell 180 ist komplett dicht verschweißt. Gleichsam ist die Steuerwalze 182, die einen Walzenkörper mit Achsen aufweist, dicht verschweißt. Ähnlich wie beim Einlauftisch 102 ist auch beim Auslauftisch eine Bandsteuerung 184 vorgesehen, die außen liegend angeordnet ist. Schließlich erkennt man hygienische Klemmkästen 186 für Elektrik und Pneumatik, die über dicht verschweißte und geschlossene Kabelführungen 188 verbunden sind.

Sämtliche Komponenten zeichnen sich dadurch aus, dass sie rundum dicht verschweißt sind und damit keine Möglichkeit bieten, dass sich darin Medien sammeln oder Kontamination bzw. Keime bilden. Es sind keine Fügekanten vorgesehen, die etwa durch Silikondichtungen abgedichtet werden müssen.

### Betriebsweise:

Im Betrieb wird am Einlaufende des Kühlkanals 100 im Bereich des Einlauftisches 102 Kühlgut auf das Förderband 32 aufgelegt und mit dem Förderband 32 zunächst durch die aufklappbaren Kühlkanalhauben 106 hindurch transportiert. In diesem herrscht ein Kühlklima, das von den Kühlvorkehrungen an den Kühltischen und dem nachgeschalteten Kühlturm 10 ausgeht.

An den Bereich unter den Kühlkanalhauben 106 anschließend wird das Kühlgut durch die im Inneren des Kühlturms 10 vorgesehene Kühlzone gefördert. Um das Kühlgut in dieser Kühlzone zu kühlen, wird die Kühleinheit 42 betrieben. Diese saugt über den Ventilator 74 Luft aus der Kühlzone entsprechend in die Filterkammer 60. Diese in die Filterkammer 60 eingesaugte Luft wird über den Ventilator 74 aus der Filterkammer 60 durch die Filtereinheit 62 gesaugt, wo die Luft gereinigt wird. Dadurch ist gewährleistet, dass die eingesaugte Luft, die gegebenenfalls auch zumindest zu einem geringen Anteil Umgebungsluft enthalten kann, hinreichend gefiltert ist und somit nur saubere Luft in die Wärmetauscherkammer 52 gelangt

Nach Durchströmen der Filtereinheit 62 strömt die Luft durch die UV-Bestrahlungseinheit 48, wo durch UV-Bestrahlung Keime abgetötet werden. Sodann strömt die Luft durch den Wärmetauscher 44, in dem sie abgekühlt wird. Im Tropfenabscheider 46 oder/und im Wärmetauscher 44 wird die gekühlte Luft entfeuchtet. Das im Wärmetauscher 44 und Tropfenabscheider 46 ausfallende Kondenswasser wird in der Auffangwanne 54 gesammelt.

Nach Verlassen des Tropfenabscheiders 46 strömt die gekühlte und entfeuchtete Luft durch die weitere UV-Bestrahlungseinheit 50, wiederum um Keime abzutöten. In diesem Zusammenhang ist festzuhalten, dass der Wärmetauscher 44 eine gewisse Bremswirkung auf den Luftstrom ausübt, was dazu führt, dass der Luftstrom über einen längeren Zeitraum den beiden UV-Bestrahlungseinheiten 48 und 50 ausgesetzt wird. Dies erhöht die keimtötende Wirkung, die über die UV-Bestrahlung erreicht wird. Schließlich strömt die Luft von der UV-Bestrahlungseinheit 50 in die Ventilatorkammer 70, von wo aus sie mit dem Ventilator 74 über den Luftleitkanal 78 in die Kühlzone geleitet wird.

Es kann mit dieser Luftführung also eine strikte Trennung zwischen der hinreichend gefilterten und sauberen produktberührenden Luft und der Umgebungsluft erreicht werden. Insbesondere kann dadurch verhindert werden, dass kontaminierte Luft in die Wärmetauscherkammer gelangt, wo sich bei Eindringen kontaminierter Luft ansonsten Keime bilden könnten. Die Schrägstellung des Ventilators 74 bringt den Vorteil einer verbesserten Anströmung des Kühlguts mit sich.

Die Erfindung zeichnet sich dadurch aus, dass diejenigen Bereiche, in denen verunreinigte Luft und Kondenswasser auftreten, insbesondere die Filterkammer 60, die Wärmetauscherkammer 52 und die Ventilatorkammer 70, von den Bereichen, in denen das zu verarbeitende Produkt gekühlt wird, also von der Kühlzone, separiert sind. Das auftretende Kondenswasser, das regelmäßig als "unkontrolliertes Wasser" im Kühlprozess auftritt und entsorgt werden muss, kann daher von diesen kritischen, keimarm zu haltenden Bereichen der Kühlzone gänzlich getrennt werden.

Die gekapselten Gehäusebereiche 60, 52, 70 sind mit separaten Abläufen bzw. Klappen versehen, um ein gezieltes Entsorgen oder Abtropfen von derartigem unkontrollierbaren Wasser sicherzustellen. Hierzu ist beispielsweise die Auffangwanne 54 in dem Gehäusebereich 52 untergebracht, um auftretende Feuchtigkeit aufzufangen und leicht entsorgen zu können.

Auch die vorstehend erwähnte Luftleiteinrichtung 78 kann zu Reinigungszwecken entfernbar sein.

Durch die Filteranordnung wird erreicht, dass dem bei herkömmlichen Vorrichtungen für Kontaminationen und Keimbildung besonders anfälligen Wärmetauscher nur gereinigte Luft zugeführt wird. Dies bedeutet, dass gerade verhindert wird, dass dem Wärmetauscher ungereinigte Umgebungsluft zugeführt wird.

Zusätzlich sei angemerkt, dass die Antriebseinheit für das Förderband 32 in dem Gehäusebereich 110 unterhalb des Förderbands angeordnet ist. Weitere Komponenten für die Energieversorgung der einzelnen angetriebenen Teile, wie etwa Pumpen, Ventile, elektrische Bauteile, Ventilator, etc. sind außerhalb der gekapselten Gehäusebereiche 60, 52 und 70 untergebracht, vorzugsweise in einer zusammengefassten und ebenfalls in einem Gehäuse gekapselt Einheit.

Hinsichtlich der geometrischen Anordnung hat die Erfindung den Vorteil, dass der gekapselte Bereich 40 mit Kühleinheit 42 und Ventilator 74 in der gezeigten Ausführungsform oberhalb der Kühlzone angeordnet werden kann und von der Kühlzone mit Ausnahme des Bereichs 78 der Einleitung der gekühlten Luft in die Kühlzone physikalisch getrennt ist. Dadurch kann bei einem kompakten Aufbau des Kühlturms 10 verhindert werden, dass unkontrolliert Feuchtigkeit oder Wasser in die Kühlzone eintritt.

Schließlich sei angemerkt, dass die einzelnen Komponenten Wärmetauscher 44, Tropfenabscheider 46, Ventilator 74, Filtereinheit 62 und Bestrahlungseinheiten 48, 50 modulartig ausgebildet und dem Kühlturm zu Wartungs- oder Reparaturzwecken entnommen werden können.

Die Figuren 7 bis 9 zeigen einen Kühlturm 10, der im wesentlichen gleich dem Kühlturm gemäß den Figuren 4 bis 6 ausgebildet ist, wobei dieser Kühlzone noch auf seinem Dach Steuerkomponenten sowie Versorgungskomponenten für Pneumatik aufweist. Ansonsten entsprechen die gezeigten Komponenten und der Aufbau im Inneren demjenigen, wie vorstehend beschrieben.

## Patentansprüche

1. Kühlkanal (100) zum Kühlen von Kühlgut, insbesondere Lebensmittel oder pharmazeutische Produkte, umfassend einen Kühlturm (10) mit:
- einem Einlaufende (12) und einem Auslaufende (14),
- einem angetriebenen Förderband (32), auf dem das Kühlgut angeordnet und von dem Einlaufende (12) zu dem Auslaufende (14) durch den Kühlturm (10) förderbar ist,
- ein Gehäuse (18), das das Förderband (32) umgibt und im Bereich des Förderbands eine Kühlzone bildet,
- eine Filtereinheit (62) zum Filtern von Luft,
- eine Kühleinheit (42) zum Kühlen der Kühlzone und
- wenigstens einen Ventilator (74), der in thermodynamischer Wechselwirkung mit der Kühleinheit (42) steht und zum Fördern von gekühlter Luft von der Kühleinheit (42) zur Kühlzone ausgebildet ist,
wobei die Kühleinheit (42) und der Ventilator (74) in einem gegenüber der Kühlzone separat und hiervon abgedichtet ausgebildeten Gehäusebereich (42, 60, 70) angeordnet sind,
**dadurch gekennzeichnet, dass** lediglich eine fluidische Verbindung zum Fördern der gekühlten Luft zwischen dem Ventilator (74) und der Kühlzone vorgesehen ist, wobei die Filtereinheit (62) bezüglich des Luftstroms vor der Kühleinheit (42) angeordnet ist, um der Kühleinheit (42) lediglich gefilterte Luft zuzuführen" wobei die Kühleinheit (42) einen Wärmetauscher (44) aufweist, der mit der Umgebung in thermodynamischer Wechselwirkung steht, und wobei der Wärmetauscher (44) in einer diesem zugeordneten Wärmetauscherkammer (52) innerhalb des abgedichtet ausgebildeten Gehäusebereichs (40) angeordnet ist.

2. Kühlkanal (100) nach Anspruch 1,
**dadurch gekennzeichnet, dass** die Wärmetauscherkammer (52) innerhalb des abgedichtet ausgebildeten Gehäusebereichs (40) als separate Zelle ausgebildet ist.

3. Kühlkanal (100) nach Anspruch 1 oder 2,
**dadurch gekennzeichnet, dass** dem Wärmetauscher (44) ein Tropfenabscheider (46) zugeordnet ist.

4. Kühlkanal (100) nach Anspruch 3,
**dadurch gekennzeichnet, dass** der Tropfenabscheider (46) in der Wärmetauscherkammer (52) angeordnet ist.

5. Kühlkanal (100) nach einem der Ansprüche 1 bis 4,
**dadurch gekennzeichnet, dass** in der Wärmetauscherkammer (52) wenigstens eine entnehmbare Auffangwanne (54) unterhalb der Kühleinheit (42), angeordnet ist.

6. Kühlkanal (100) nach einem der vorangehenden Ansprüche,
**dadurch gekennzeichnet, dass** die Filtereinheit (62) in einer gegenüber der Kühlzone separat und hiervon abgedichtet ausgebildeten Filterkammer (60) des abgedichtet ausgebildeten Gehäusebereichs (40) angeordnet ist, wobei die Filterkammer (60) über eine Filterschleuse (64) mit der Kühleinheit (42) fluidisch in Verbindung steht.

7. Kühlkanal (100) nach einem der vorangehenden Ansprüche,
**dadurch gekennzeichnet, dass** der Filtereinheit (62) oder/und dem Wärmetauscher (44) eine Bestrahlungseinrichtung (48, 50) zugeordnet ist.

8. Kühlkanal (100) nach Anspruch 7,
**dadurch gekennzeichnet, dass** die Bestrahlungseinheit (48, 50) wenigstens eine UV-Lichtquelle aufweist.

9. Kühlkanal (100) nach einem der vorangehenden Ansprüche,
**dadurch gekennzeichnet, dass** der Ventilator (74) in einer diesem zugeordneten Ventilatorkammer (70) innerhalb des abgedichtet ausgebildeten Gehäusebereichs (40) angeordnet ist.

10. Kühlkanal (100) nach einem der vorangehenden Ansprüche,
**dadurch gekennzeichnet, dass** der Ventilator (74) gegenüber der Erstreckungsebene des Förderbandes (32) geneigt angeordnet ist.

11. Kühlkanal (100) nach einem der vorangehenden Ansprüche,
**dadurch gekennzeichnet, dass** dem Ventilator (74) wenigstens eine Luftleiteinrichtung (78) zum Ausrichten des Luftstroms vom Ventilator (74) in die Kühlzone zugeordnet ist.

12. Kühlkanal (100) nach einem der vorangehenden Ansprüche,
**dadurch gekennzeichnet, dass** das Gehäuse (18) im Bereich der Kühlzone oder/und in dem hiervon separat und abgedichtet ausgebildeten Gehäusebereich (40) zur Aufnahme der Kühleinheit (42) und des Ventilators (74) jeweils durch eine oder mehrere Klappen oder Hauben (22, 24, 26, 28, 30) zu öffnen und verschließbar ist.

13. Kühlkanal (100) nach einem der vorangehenden Ansprüche,
**dadurch gekennzeichnet, dass** das Gehäuse (18) des Kühlturms und Unterbaukomponenten des Kühlkanals jeweils dicht verschweißt und aus Edelstahl hergestellt sind.

14. Kühlkanal (100) nach den Ansprüchen 1, 6, 9 und einem der vorangehenden Ansprüche,
**dadurch gekennzeichnet, dass** die Wärmetauscherkammer (52), die Filterkammer (60) und die Ventilatorkammer (70) mit einer wesentlich größeren Breite ausgeführt sind als das Förderband (32) und beidseits des Förderbandes (32) quer zu dessen Förderrichtung (F) über das Förderband (32) hinaus stehen.

## Claims

1. Cooling channel (100) for cooling goods to be cooled, in particular food or pharmaceutical products, comprising a cooling tower (10) having:
- an inlet end (12) and an outlet end (14);
- a driven conveyor belt (32), on which the goods to be chilled are arranged and can be conveyed through the cooling tower (10) from the inlet end (12) to the outlet end (14);
- a housing (18), which surrounds the conveyor belt (32) and forms a cooling zone in the region of said conveyor belt;
- a filter unit (62) for filtering air;
- a cooling unit (42) for cooling the cooling zone; and
- at least one ventilator (74), which interacts thermodynamically with the cooling unit (42) and which is designed to convey cooled air from the cooling unit (42) to the cooling zone;
wherein the cooling unit (42) and the ventilator (74) are arranged in a housing region (42, 60, 70) which is separate in relation to the cooling zone and sealed therefrom,
**characterised in that** only a fluid connection is provided for conveying the cooled air between the ventilator (74) and the cooling zone, wherein the filter unit (62) is arranged in front of the cooling unit (42) with respect to the air flow in order to supply only filtered air to said cooling unit (42), wherein the cooling unit (42) has a heat-exchanger (44) which interacts thermodynamically with the surroundings, and wherein the heat-exchanger (44) is arranged in a heat-exchanger chamber (52) associated with the latter, inside the housing region (40) which is designed in a sealed-off manner.

2. Cooling channel (100) according to Claim 1,
**characterised in that** the heat-exchanger chamber (52) is designed as a separate cell inside the housing region (40) which is designed in a sealed-off manner.

3. Cooling channel (100) according to Claim 1 or 2,
**characterised in that** a droplet-separator (46) is associated with the heat-exchanger (44).

4. Cooling channel (100) according to Claim 3,
**characterised in that** the droplet-separator (46) is arranged in the heat-exchanger chamber (52).

5. Cooling channel (100) according to one of Claims 1 to 4,
**characterised in that** at least one removable collecting trough (54) is arranged in the heat-exchanger chamber (52), underneath the cooling unit (42).

6. Cooling channel (100) according to one of the preceding claims,
**characterised in that** the filter unit (62) is arranged in a filter chamber (60) belonging to the housing region (40) which is designed in a sealed-off manner, which filter chamber is designed so as to be separate in relation to the cooling zone and sealed off therefrom, wherein said filter chamber (60) is in fluidic connection with the cooling unit (42) via a filter lock (64).

7. Cooling channel (100) according to one of the preceding claims,
**characterised in that** an irradiation apparatus (48, 50) is associated with the filter unit (62) or/and the heat-exchanger (44).

8. Cooling channel (100) according to Claim 7,
**characterised in that** the irradiation unit (48, 50) has at least one UV light source.

9. Cooling channel (100) according to one of the preceding claims,
**characterised in that** the ventilator (74) is arranged in a ventilator chamber (70), which is associated with the latter, inside the housing region (40) which is designed in a sealed-off manner.

10. Cooling channel (100) according to one of the preceding claims,
**characterised in that** the ventilator (74) is arranged inclined relative to the extension plane of the conveyor belt (32).

11. Cooling channel (100) according to one of the preceding claims,
**characterised in that** at least one air-guidance apparatus (78) for guiding the air flow from the ventilator (74) into the cooling zone is associated with said ventilator (74).

12. Cooling channel (100) according to one of the preceding claims,
**characterised in that** the housing (18) in the region of the cooling zone and/or in the housing region (40), separated therefrom in a sealed-off manner, may be opened and closed by one or more flaps or hoods separately (22, 24, 6, 28, 30) upon receipt of the cooling unit (42) and the ventilator (74).

13. Cooling channel (100) according to one of the preceding claims,
**characterised in that** the housing (18) of the cooling tower and substructure components of the cooling channel are, each separately, welded in a sealed manner and manufactured from stainless steel.

14. Cooling channel (100) according to Claims 1, 6, 9 and one of the preceding claims,
**characterised in that** the heat-exchanger chamber (52), the filter chamber (60) and the ventilator chamber (70) are constructed with a substantially greater width than the conveyor belt (32) and protrude beyond said conveyor belt (32) on both sides of the latter, transversely to its conveying direction (F).

## Revendications

1. Canal de refroidissement (100) pour refroidir des produits à réfrigérer, en particulier des produits alimentaires ou des produits pharmaceutiques, comprenant une tour de refroidissement (10) comportant :
- extrémité d'entrée (12) et une extrémité de sortie (14),
- une bande transporteuse (32) entraînée sur laquelle les produits à réfrigérer sont disposés et peuvent être transportés de l'extrémité d'entrée (12) à l'extrémité de sortie (14) via la tour de refroidissement (10),
- un logement (18) qui entoure la bande transporteuse (32) et forme une zone de refroidissement dans la région de la bande transporteuse,
- une unité de filtre (62) pour filtrer l'air,
- une unité de refroidissement (42) pour refroidir la zone de refroidissement et
- au moins un ventilateur (74) qui est en interaction thermodynamique avec l'unité de refroidissement (42) et qui est conçu pour transporter de l'air refroidi de l'unité de refroidissement (42) à la zone de refroidissement,
l'unité de refroidissement (42) et le ventilateur (74) étant disposés dans une région (42, 60, 70) du logement séparée de la zone de refroidissement et étanche par rapport à celle-ci,
**caractérisée en ce qu'**il est prévu uniquement une liaison fluidique pour transporter l'air refroidi entre le ventilateur (74) et la zone de refroidissement, l'unité de filtre (62) étant disposée, par rapport au flux d'air, avant l'unité de refroidissement (42) pour n'alimenter celle-ci (42) qu'avec de l'air filtré, l'unité de refroidissement (42) présentant un échangeur de chaleur (44) qui est en interaction thermodynamique avec l'environnement, et l'échangeur de chaleur (44) étant disposé dans une chambre d'échange thermique (52) qui lui est associée, à l'intérieur de la région (40) du logement conçue de manière étanche.

2. Canal de refroidissement (100) selon la revendication 1,
**caractérisé en ce que** la chambre d'échange thermique (52) est réalisée sous forme de cellule séparée à l'intérieur de la région (40) du logement conçue de manière étanche.

3. Canal de refroidissement (100) selon la revendication 1 ou 2,
**caractérisé en ce qu'**un séparateur de gouttelettes (46) est associé à l'échangeur de chaleur (44).

4. Canal de refroidissement (100) selon la revendication 3,
**caractérisé en ce que** le séparateur de gouttelettes (46) est disposé dans la chambre d'échange thermique (52).

5. Canal de refroidissement (100) selon l'une des revendications 1 à 4,
**caractérisé en ce qu'**au moins un bac de récupération (54) amovible est disposé dans la chambre d'échange thermique (52), en dessous de l'unité de refroidissement (42).

6. Canal de refroidissement (100) selon l'une des revendications précédentes,
**caractérisé en ce que** l'unité de filtre (62) est disposée dans une chambre à filtre (62) de la région (40) du logement conçue de manière étanche, laquelle chambre à filtre est conçue séparée de la zone de refroidissement et étanche par rapport à celle-ci, la chambre à filtre (60) étant en liaison fluidique avec l'unité de refroidissement (42) par le biais d'un sas à filtre (64).

7. Canal de refroidissement (100) selon l'une des revendications précédentes,
**caractérisé en ce qu'**un dispositif de rayonnement (48, 50) est associé à l'unité de filtre (62) ou/et à l'échangeur de chaleur (44).

8. Canal de refroidissement (100) selon la revendication 7,
**caractérisé en ce que** le dispositif de rayonnement (48, 50) présente au moins une source de lumière ultraviolette.

9. Canal de refroidissement (100) selon l'une des revendications précédentes,
**caractérisé en ce que** le ventilateur (74) est disposé dans une chambre de ventilation (79) qui lui est associée, à l'intérieur de la région (40) du logement conçue de manière étanche.

10. Canal de refroidissement (100) selon l'une des revendications précédentes,
**caractérisé en ce que** le ventilateur (74) est disposé incliné par rapport au plan d'extension de la bande transporteuse (32).

11. Canal de refroidissement (100) selon l'une des revendications précédentes,
**caractérisé en ce qu'**au moins un dispositif (78) de guidage d'air est associé au ventilateur (74) pour diriger le flux d'air du ventilateur (74) à la zone de refroidissement.

12. Canal de refroidissement (100) selon l'une des revendications précédentes,
**caractérisé en ce que** le logement (18) peut être ouvert ou fermé par le biais d'un ou de plusieurs clapets ou capots (22, 24, 26, 28, 30) dans la région de la zone de refroidissement ou/et dans la zone (40) du logement conçue séparée et étanche par rapport à la zone de refroidissement pour loger l'unité de refroidissement (42) et le ventilateur (74).

13. Canal de refroidissement (100) selon l'une des revendications précédentes,
**caractérisé en ce que** le logement (18) de la tour de refroidissement et des sous-constituants du canal de refroidissement sont respectivement soudés de manière étanche et fabriqués à partir d'acier inox.

14. Canal de refroidissement (100) selon les revendications 1, 6, 9 et l'une des revendications précédentes,
**caractérisé en ce que** la chambre d'échange thermique (52), la chambre à filtre (60) et la chambre de ventilation (70) sont réalisées dans une largeur sensiblement plus grande que la bande transporteuse (32) et débordent des deux côtés de la bande transporteuse (32), perpendiculairement au sens de transport (F) de celle-ci.
